# FASCICULE DE BREVET EUROPEEN

(11) **EP 3 540 888 B1**
(45) Date de publication et mention de la délivrance du brevet: **24.02.2021**
(21) Numéro de dépôt: 19163058.1
(22) Date de dépôt: 15.03.2019
(51) Int. Cl.: H02G 15/18, F16B 5/06, H01R 4/70, F16B 21/02, F16B 21/08

(54) **ENSEMBLE POUR RECOUVRIR A ENSERREMENT UN ELEMENT ALLONGE AVEC UN MANCHON ELASTIQUE DE PROTECTION**
EINHEIT ZUR UMMANTELUNG EINES LÄNGLICHEN ELEMENTS MIT EINER ELASTISCHEN SCHUTZHÜLLE
UNIT FOR TIGHTLY COVERING AN ELONGATE ELEMENT WITH A RESILIENT PROTECTIVE SLEEVE

(30) Priorité: 15.03.2018 FR 1852249
(43) Date de publication de la demande: 18.09.2019
(73) Titulaire: Societe Industrielle de Construction d'Appareils et de Materiel Electriques, 19230 Arnac Pompadour (FR)
(72) Inventeur: DELOGER, Olivier Loïc, 19230 ARNAC POMPADOUR (FR)
(74) Mandataire: Santarelli

(56) Documents cités:
- WO-A1-2004/006403
- FR-A1- 2 791 480

## Description

L'invention concerne la pose d'un manchon élastique de protection sur un élément allongé tel qu'un câble électrique ou deux câbles électriques joints l'un à l'autre.

On connait par la demande internationale WO 2004/006403 un ensemble pour effectuer une telle pose, comportant un noyau tubulaire de maintien en expansion du manchon, recouvert à enserrement par ledit manchon, configuré pour recevoir intérieurement l'élément allongé ; ainsi qu'un élément de glissement interposé entre le manchon et le noyau pour permettre au noyau de coulisser par rapport au manchon.

On connait également par les demandes de brevet français 2 926 410 et 3 026 240 un ensemble pour effectuer une telle pose, décrit ci-après en référence aux figures 1 à 3 des dessins annexés. Sur ceux-ci :
- la figure 1 est une vue en coupe longitudinale d'un mode de réalisation de cet ensemble ;
- la figure 2 est la vue en coupe transversale repérée par II-II sur la figure 1 ; et
- la figure 3 est une vue semblable à la figure 1 mais avec un élément allongé à recouvrir mis en place à l'intérieur de l'ensemble et avec le noyau de l'ensemble en cours d'expulsion par le manchon.

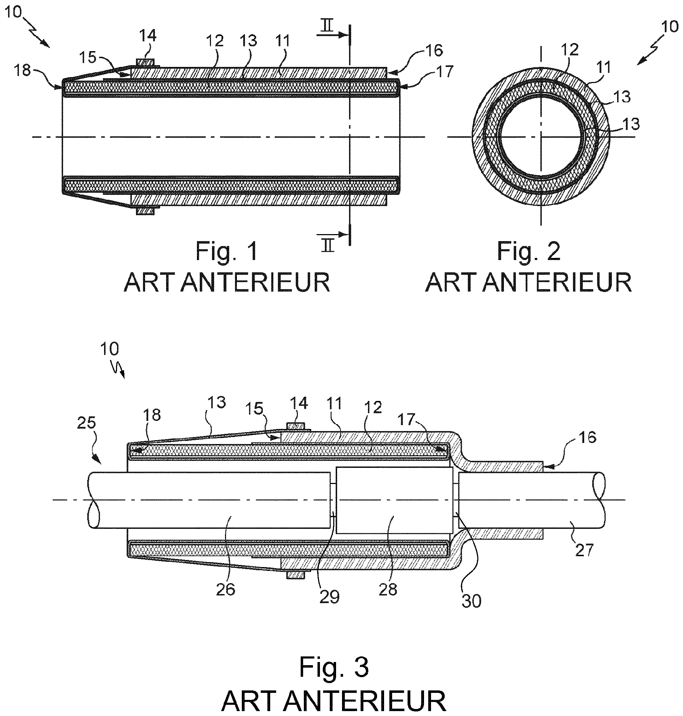

L'ensemble 10 illustré sur la figure 1 comporte un manchon élastique de protection 11, un noyau tubulaire 12, un film de glissement 13 et un anneau élastique 14 enserrant le film 13 sur la surface externe du manchon 11 afin de l'y fixer.

Le manchon 11 est prévu pour recouvrir à enserrement un élément allongé tel qu'un tronçon de câble électrique ou deux tronçons de câbles électriques afin de procurer une isolation électrique et une étanchéité à l'air et à l'eau.

Le noyau tubulaire 12 s'étend longitudinalement et sert à maintenir le manchon 11 en expansion, c'est-à-dire dans un état dilaté radialement par rapport à l'état qu'il adopte en l'absence de contrainte externe. Le noyau 12 est ainsi recouvert à enserrement par le manchon 11. L'espace interne au noyau 12 est configuré pour recevoir intérieurement l'élément allongé 25 qui doit être recouvert par le manchon de protection 11.

Le film de glissement 13 est interposé entre le manchon 11 et le noyau 12 pour leur permettre de coulisser l'un par rapport à l'autre.

Le noyau 12 peut ainsi coulisser à la fois par rapport à l'élément allongé 25 qui y est mis en place et par rapport au manchon 11 pour que celui-ci vienne recouvrir à enserrement l'élément allongé.

Le noyau 12 s'étend au-delà de chacune des extrémités 15 et 16 du manchon 11. L'extrémité 18 du noyau est relativement éloignée de l'extrémité 15 du manchon située du même côté tandis que l'extrémité 17 du noyau, qui est opposée à l'extrémité 18, est relativement proche de l'extrémité 16 du manchon située du même côté.

La proximité des extrémités 16 et 17 est utile pour amorcer de façon simple et commode l'extraction du noyau 12, qui est prévue pour s'effectuer avec le noyau 12 qui est entraîné par rapport au manchon 11 dans le sens qui va de l'extrémité 17 vers l'extrémité 18.

Le film 13 est interposé entre le manchon élastique 11 et le noyau 12 sur toute la longueur du manchon 11, c'est-à-dire entre ses extrémités 15 et 16. Le film 13 se prolonge légèrement au-delà de l'extrémité 15. De l'autre côté du manchon 11, le film 13 s'étend au-delà de l'extrémité 16 jusqu'à faire demi-tour sur l'extrémité 17 du noyau située du côté de l'extrémité 16 puis s'étend intérieurement au noyau 12 jusqu'à son extrémité 18 sur laquelle il fait demi-tour puis s'étend extérieurement au noyau 12 jusqu'au manchon 11 auquel il est fixé extérieurement par l'anneau élastique 14.

Sur la figure 3, l'ensemble 10 est représenté avec un élément allongé 25 inséré dans le noyau 12 et avec le noyau 12 en cours d'expulsion par le manchon 11.

L'élément allongé 25 est formé par deux câbles électriques 26 et 27 disposés bout à bout et par un élément de jonction 28 posé sur des tronçons d'extrémité dénudés 29 et 30 respectivement du câble 26 et du câble 27.

Dans l'exemple illustré, les câbles 26 et 27 ne comportent pas d'autres tronçons d'extrémité accessibles de sorte que l'un des câbles 26 et 27 a d'abord été inséré dans le dispositif 10, l'élément de jonction 28 a ensuite été posé, le dispositif 10 a ensuite été positionné avec le manchon 11 positionné par rapport à l'élément allongé 25 à l'emplacement qu'il doit adopter sur cet élément.

Pour que le manchon 11 vienne recouvrir l'élément 25, on opère une action de mise en mouvement du noyau 12 pour le faire coulisser par rapport au manchon 11 dans le sens qui va de l'extrémité 17 vers l'extrémité 18, le manchon 11 se contractant sur l'élément allongé 25 au fur et à mesure que le noyau 12 est expulsé du manchon 11.

Ce dernier recouvre alors à enserrement l'élément allongé 25 auquel il procure, au niveau de l'élément de jonction 28 et de part et d'autre de celui-ci, une isolation électrique et une étanchéité à l'air et à l'eau.

Pour faciliter la tâche d'un opérateur devant faire coulisser le noyau 12 par rapport au manchon 11, le film de glissement 13 se subdivise, entre l'extrémité 17 et l'extrémité 18, en deux tronçons se rétrécissant chacun jusqu'à former une bande de fixation relativement étroite, chacune des deux bandes de fixation étant diamétralement opposée et faisant demi-tour sur l'extrémité 18 du noyau pour venir se fixer sur le manchon 11 grâce à l'anneau élastique 14.

L'espace existant entre les deux bandes de fixation donne directement accès au noyau 12 et permet de le saisir, par exemple entre les doigts d'une main alors que l'autre main saisit le manchon 11.

Pour éviter le déclenchement intempestif de l'expulsion du noyau 12 hors du manchon 11, il est connu d'agir sur la portion du film de glissement 13 située entre l'extrémité 15 du manchon 11 et l'extrémité 18 du noyau 12, en maintenant cette portion du film au noyau tant que l'expulsion du noyau doit être évitée, et en libérant cette portion du film lorsque l'expulsion du noyau doit être mise en œuvre.

Pour ce faire, la demande de brevet français 2 791 480 décrit un ruban adhésif à cheval sur le film de glissement et sur le noyau, ce ruban adhésif étant retiré pour mettre en œuvre l'expulsion du noyau. L'ensemble décrit par ce document est semblable à celui illustré sur les figures 1 à 3 mais dans une version antérieure où le film de glissement, après avoir fait demi-tour sur l'extrémité du noyau semblable à l'extrémité 17, se raccorde à deux liens élastiques en tension qui s'étendent, diamétralement opposés l'un à l'autre, intérieurement au noyau, auquel chaque lien élastique est fixé à proximité de l'extrémité semblable à l'extrémité 18. L'ensemble décrit par la demande de brevet français 2 791 480 ne comporte donc au-dessus du ruban adhésif aucune portion du film de glissement, de sorte qu'il n'y a pas d'obstacle gênant l'enlèvement du ruban adhésif par un mouvement circulaire autour du noyau.

La demande de brevet européen EP 1 263 107 décrit une solution semblable mais où le film de glissement est libéré sans retirer le ruban adhésif : un filin est enroulé sur le noyau sous le film selon un tour complet puis fait demi-tour sur un bord longitudinal du film puis est enroulé selon un tour complet sur le film jusqu'à un point de colle entre le film et le filin à partir duquel un tronçon du filin s'étend librement, ce tronçon libre étant suffisamment long pour pouvoir être saisi par un opérateur. Une amorce de rupture est réalisée dans le bord du film en regard du demi-tour du filin. L'exercice d'un effort de traction sur le tronçon libre du filin casse le point de colle et entraîne une mise en appui du demi-tour du filin sur le bord du film et le déchirement progressif du film autour du noyau. La bande marginale autour de laquelle est posé le ruban adhésif n'est plus liée au film, qui est ainsi libéré du noyau. L'ensemble décrit par la demande de brevet européen EP 1 263 107 est semblable à celui illustré sur les figures 1 à 3 mais dans une version antérieure où, tout comme l'ensemble décrit par la demande de brevet français 2 791 480, le film de glissement, après avoir fait demi-tour sur l'extrémité du noyau semblable à l'extrémité 17, se raccorde à deux liens élastiques en tension qui s'étendent, diamétralement opposés l'un à l'autre, intérieurement au noyau. Une autre différence entre l'ensemble antérieur décrit par la demande de brevet européen EP 1 263 107 et l'ensemble illustré sur les figures 1 à 3 est que dans l'ensemble antérieur décrit par la demande de brevet européen EP 1 263 107, le manchon est un peu plus que deux fois plus long et coopère avec un second noyau tubulaire et un second film de glissement disposés en image miroir de ceux susmentionnés ; un second ruban adhésif, un second filin de déchirement et un second couple de lien élastique semblables à ceux décrit ci-dessus étant prévus. A la différence de l'ensemble décrit par la demande de brevet français 2 791 480, dans l'ensemble antérieur décrit par la demande de brevet européen EP 1 263 107 aucun des liens élastiques n'est fixé au noyau : après s'être étendu intérieurement au noyau, chaque lien élastique fait demi-tour sur l'extrémité du noyau semblable à l'extrémité 18 puis s'étend extérieurement au noyau et au manchon jusqu'à rejoindre le lien élastique opposé auquel il est fixé. Ainsi, contrairement à l'ensemble décrit par la demande de brevet français 2 791 480, dans l'ensemble décrit par la demande de brevet européen EP 1 263 107 il existe autour de chaque ruban adhésif des obstacles (les deux liens élastiques) gênant l'enlèvement du ruban adhésif par un mouvement circulaire autour du noyau. L'intérêt du filin de déchirement est de permettre, malgré ces obstacles, la libération aisée du film par l'opérateur puisqu'il lui suffit de tirer sur le tronçon libre du filin de déchirement.

Il est par ailleurs connu de munir l'ensemble illustré sur les figures 1 à 3 d'un cordon de colle jouant le rôle du ruban adhésif susmentionné et d'un filin de déchirement agencé de façon semblable, appelé « artisette ».

L'invention vise un tel ensemble qui soit particulièrement simple et commode tant à la fabrication qu'à l'utilisation.

L'invention propose à cet effet un ensemble pour recouvrir à enserrement un élément allongé de dimensions prédéterminées avec un manchon élastique de protection, comportant :
- ledit manchon ;
- un noyau tubulaire de maintien en expansion dudit manchon, recouvert à enserrement par ledit manchon, configuré pour recevoir intérieurement ledit élément allongé ;
- un film de glissement interposé entre ledit manchon et ledit noyau pour permettre audit noyau de coulisser par rapport audit manchon ; et
- une adjonction du film de glissement liée mécaniquement au film de glissement et fixée au noyau à un emplacement de fixation prédéterminé situé entre une extrémité du manchon et une extrémité du noyau située au-delà de ladite extrémité du manchon ;
ledit ensemble étant caractérisé en ce qu'il comporte en outre une attache pourvue d'un organe mâle de verrouillage tandis que ledit noyau présente un organe femelle de verrouillage, ledit organe femelle et ledit organe mâle étant audit emplacement prédéterminé de fixation dans une position relative prédéterminée de verrouillage où l'organe mâle est verrouillé au noyau avec l'adjonction du film qui est fixée au noyau par pincement entre l'organe mâle et l'organe femelle ; ladite adjonction, ledit organe femelle et ladite attache étant configurés pour que l'organe mâle puisse être déplacé par rapport à l'organe femelle jusqu'à ce que l'organe mâle et l'organe femelle prennent une position relative prédéterminée de déverrouillage où l'organe mâle est libre d'être enlevé de l'organe femelle tandis que l'adjonction est libre de se déplacer par rapport au noyau.

Ainsi, dans la position relative prédéterminée de verrouillage l'adjonction du film est maintenue au noyau et par conséquent le film, qui est lié mécaniquement à l'adjonction, ne peut coulisser par rapport au noyau de sorte que l'expulsion du noyau hors du manchon ne peut se produire.

Dans la position relative prédéterminée de déverrouillage, l'adjonction du film est libre de se déplacer par rapport au noyau et par conséquent l'expulsion du noyau hors du manchon peut être mise en œuvre.

L'invention est basée sur l'observation qu'il est en fait possible de laisser l'adjonction liée mécaniquement au film lorsque le film doit être libéré du noyau. Dans l'ensemble selon l'invention, cela est rendu possible en prévoyant de maintenir l'adjonction au noyau par un pincement rendu réversible du fait qu'il est produit grâce à une attache mise en place sur le noyau et pouvant être enlevée de celui-ci.

On observera qu'au contraire, dans les ensembles antérieurs susmentionnés, les adjonctions (le ruban adhésif qui est retiré par un mouvement circulaire autour du noyau ou bien la bande marginale venue de matière avec le film et fixée au noyau par un ruban adhésif ou de la colle), qui sont liées mécaniquement au film lorsque celui-ci doit être maintenu au noyau, doivent être détachées du film (retrait du ruban adhésif ou déchirement par le filin de la matière entre le film et l'adjonction) lorsque le film doit être libéré.

On observera encore que le détachement de l'adjonction des ensembles antérieurs susmentionnés implique un mouvement circulaire autour du noyau, directement effectué par l'opérateur qui retire le ruban adhésif ou commandé par l'opérateur qui tire sur le tronçon libre du filin de déchirement, et par conséquent une opération relativement complexe effectuée par l'opérateur (retrait du ruban adhésif, en particulier lorsqu'il existe des obstacles autour du ruban adhésif) ou à la fabrication de l'ensemble (mise en place du filin de déchirement).

Au contraire, la mise en place ou l'enlèvement de l'attache de l'ensemble selon l'invention est simple et commode à effectuer.

Selon des caractéristiques avantageuses de l'ensemble selon l'invention :
- le déplacement de l'organe mâle par rapport à l'organe femelle entre la position relative de verrouillage et la position relative de déverrouillage est un déplacement angulaire ;
- ledit organe femelle comporte un logement débouchant par une ouverture sur la surface externe du noyau et un renfoncement débouchant dans ledit logement et étant en retrait par rapport à ladite ouverture, ledit renfoncement étant délimité par une surface de pincement, ledit organe mâle comportant un ergot présentant une surface de pincement, ladite adjonction étant pincée entre ladite surface de pincement du renfoncement et ladite surface de pincement de l'ergot dans ladite position prédéterminée de verrouillage ; ledit logement, ledit renfoncement et ledit ergot étant configurés pour que l'ergot soit hors dudit renfoncement dans ladite position prédéterminée de déverrouillage ;
- ladite surface de pincement du renfoncement est formée dans un rebord de la surface interne du noyau ;
- ladite surface de pincement du renfoncement comporte une première portion inclinée et une deuxième portion inclinée, la première portion et la deuxième portion étant inclinée l'une vers l'autre, ladite surface de pincement dudit ergot comporte une première portion incurvée et une deuxième portion incurvée, ladite adjonction étant pincée entre la première portion inclinée et la première portion incurvée ainsi qu'entre la deuxième portion inclinée et la deuxième portion incurvée ;
- ledit organe femelle comporte un autre renfoncement étant l'image miroir dudit renfoncement par rapport à un plan médian dudit logement, ledit organe mâle comportant un fût duquel saille latéralement ledit ergot et un autre ergot opposé audit ergot, ladite adjonction étant également pincée entre une surface de pincement dudit autre renfoncement et une surface de pincement dudit autre ergot dans ladite position prédéterminée de verrouillage ; ledit logement, ledit autre renfoncement et ledit autre ergot étant configurés pour que ledit autre ergot soit hors dudit autre renfoncement dans ladite position prédéterminée de déverrouillage ;
- ledit logement, ledit renfoncement et ledit autre renfoncement débouchent dans l'espace interne au noyau ; dans ladite position prédéterminée de verrouillage l'adjonction comporte deux tronçons superposés pincés entre ladite surface de pincement du renfoncement et ladite surface de pincement de l'ergot, respectivement un premier tronçon en contact avec la surface de pincement du renfoncement et un deuxième tronçon en contact avec la surface de pincement de l'ergot, ledit premier tronçon étant raccordé audit film de glissement du côté externe au noyau, l'adjonction comportant un tronçon distal auquel est raccordé ledit deuxième tronçon du côté externe au noyau, les deux tronçons superposés s'étendant à partir dudit renfoncement dans l'espace interne au noyau, ladite adjonction comportant une boucle reliant les deux tronçons superposés en s'étendant dans l'espace interne au noyau à partir du premier tronçon jusqu'à faire demi-tour sur ladite extrémité du noyau puis s'engage dans ledit logement puis s'étend dans ledit autre renfoncement où elle est pincée entre ladite surface de pincement dudit autre renfoncement et ladite surface de pincement dudit autre ergot puis s'étend dans l'espace interne au noyau où elle rejoint ledit deuxième tronçon ;
- l'attache comporte une cale d'enfoncement présentant un contour similaire à celui de ladite ouverture et étant montée à rotation sur le reste de l'attache autour de la direction axiale dudit fût ; et dans ladite position prédéterminée de verrouillage, ladite cale d'enfoncement est dans l'espace interne au noyau et l'adjonction passe sur la cale d'enfoncement ;
- ledit logement a un contour ovale ;
- ledit organe mâle comporte un fût duquel saille latéralement un ergot, le fût étant lié rigidement à un bras de manœuvre qui est en regard de la surface externe du noyau ;
- ledit ensemble comporte en outre une autre attache, semblable à ladite attache et ledit noyau présente un autre organe femelle de verrouillage, semblable audit organe femelle de verrouillage ; et/ou
- ledit noyau s'étend entre ladite extrémité et une autre extrémité, opposée à ladite extrémité tandis que ledit film de glissement s'étend jusqu'à ladite autre extrémité sur laquelle ledit film de glissement fait demi-tour puis s'étend intérieurement audit noyau jusqu'à ladite extrémité sur laquelle deux bandes de fixation du film de glissement, diamétralement opposée, font demi-tour puis s'étendent extérieurement audit noyau jusqu'audit manchon auquel elles sont fixées extérieurement, lesdites deux bandes de fixations étant décalées angulairement par rapport à ladite adjonction.

L'exposé de l'invention sera maintenant poursuivi par la description détaillée d'exemples de réalisation, donnée ci-après à titre illustratif et non limitatif, en référence aux dessins annexés. Sur ceux-ci :
- les figures 1 à 3 illustrent un ensemble antérieur déjà décrit ci-dessus ;

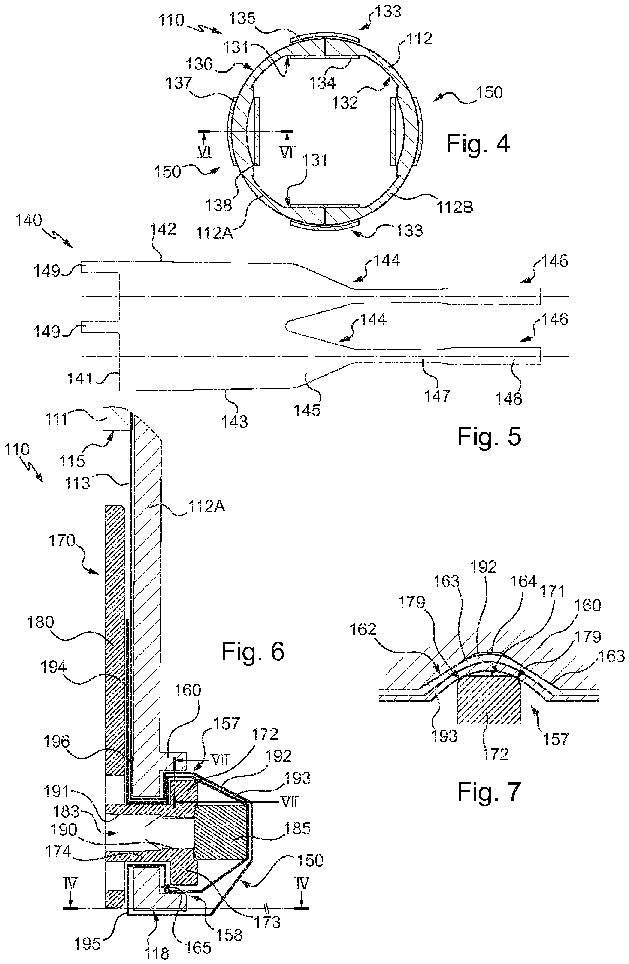

- la figure 4 est une vue en coupe transversale semblable à la figure 2 mais pour un ensemble conforme à l'invention tandis que cette vue est prise comme montré en IV-IV sur la figure 6, à savoir à proximité de l'extrémité 118 du noyau 112 qui correspond à l'extrémité 18 du noyau 12 ;
- la figure 5 est une vue en plan d'un flan découpé dans une feuille de matière à faible coefficient de frottement, le film de glissement de l'ensemble illustré sur la figure 4 étant obtenu en mettant en place ce flan sur le noyau ;
- la figure 6 est une vue partielle en coupe de l'ensemble selon l'invention illustré sur la figure 4, cette vue étant prise comme montré en en VI-VI sur la figure 4 ;
- la figure 7 est la vue partielle en coupe repérée par VII-VII sur la figure 6 ;

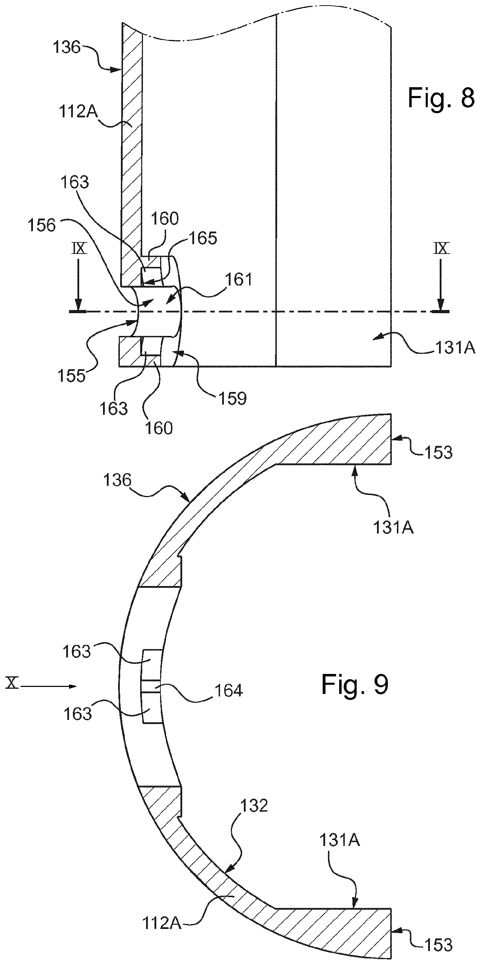

- la figure 8 est une vue partielle en coupe d'un des deux demi-noyaux qui forment le noyau de l'ensemble illustré sur les figures 4 et 6, cette vue étant prise suivant le même plan de coupe que la figure 6 ;
- la figure 9 est la vue en coupe repérée par IX-IX sur la figure 8 ;

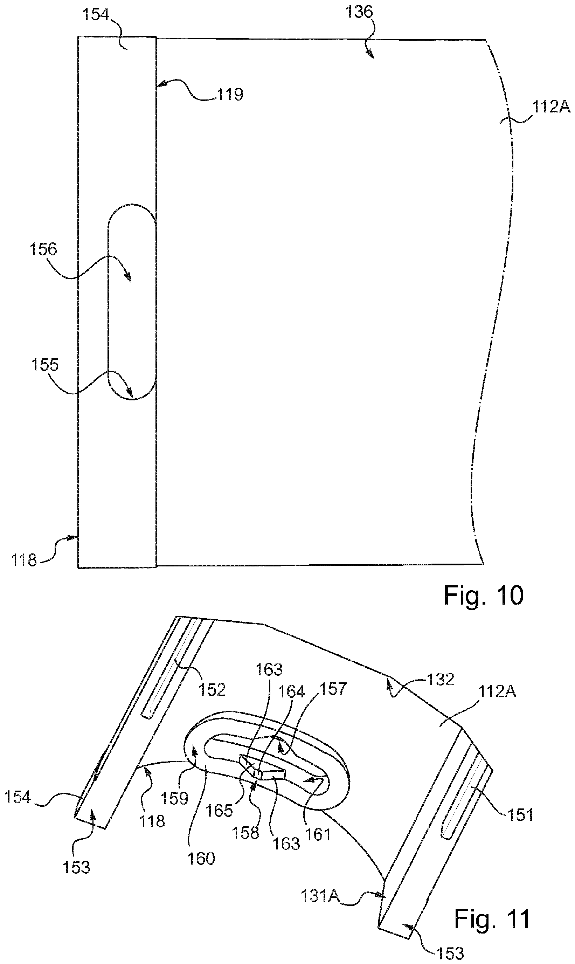

- la figure 10 est la vue partielle de côté repérée par X sur la figure 9;
- la figure 11 est une vue partielle en perspective du demi-noyau, montrant les surfaces que l'on voit à droite sur la figure 9 ;

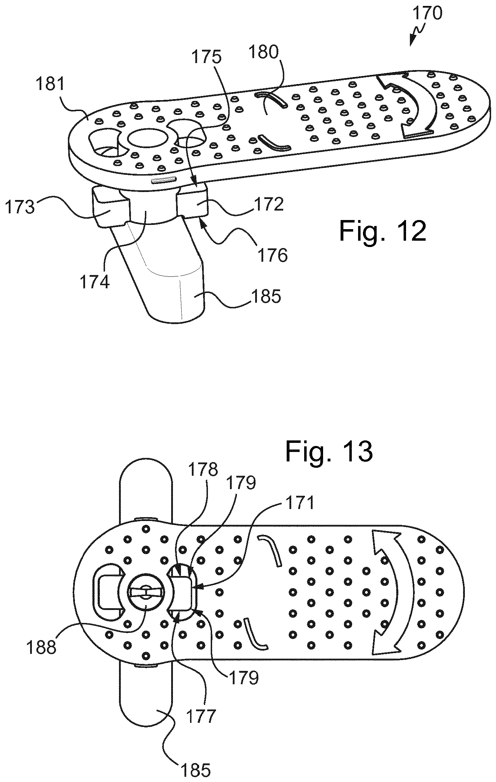

- les figures 12 et 13 sont des vues respectivement en perspective et en plan de l'attache montrée en coupe sur la figure 6 ;

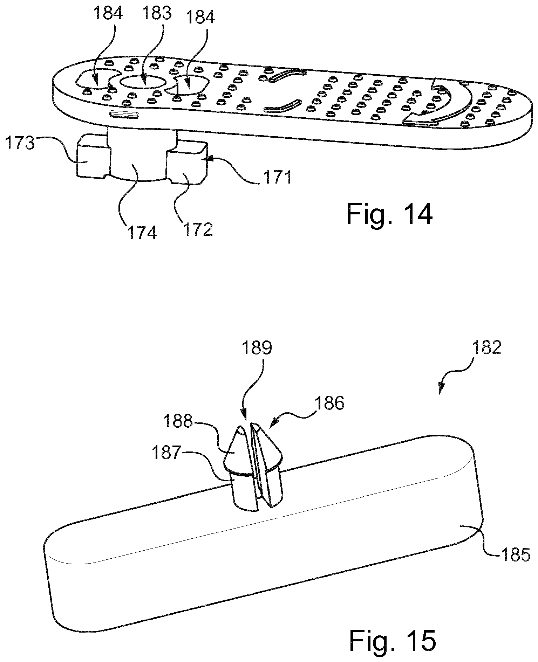

- la figure 14 est une vue en perspective de l'attache mais sans son pied et prise sous un autre angle que sur la figure 12 ; et
- la figure 15 est une vue en perspective illustrant seulement le pied de l'attache.

Dans la description qui suit de l'ensemble 110 conforme à l'invention illustré sur les figures 4 et suivantes, on a employé pour les éléments similaires les mêmes références numériques que pour l'ensemble 10 illustré sur les figures 1 à 3, mais additionnées du nombre 100.

D'une façon générale, à l'exception des caractéristiques décrites ci-après, l'ensemble 110 est agencé comme l'ensemble 10 et configuré pour coopérer avec un élément allongé tel que 25 de la même façon que l'ensemble 10.

Alors que les figures 1 à 3 sont assez schématiques, les figures 4 et suivantes sont relativement détaillées.

Comme on le voit sur la figure 4, le noyau 112 est formé par deux demi-noyaux 112A et 112B solidarisés l'un à l'autre, et comme on le voit sur la figure 11, le demi-noyau 112A possède sur l'une de ses tranches 153 une languette 151 et sur son autre tranche 153 une rainure 152.

Le demi-noyau 112B est identique au demi-noyau 112A. La description donnée ci-après pour le demi-noyau 112A vaut donc également pour le demi-noyau 112B.

A l'état assemblé du noyau 112 (figure 4), le noyau 112A et le noyau 112B sont décalés angulairement de 180° avec la languette 151 du demi-noyau 112A qui est engagée dans la rainure 152 du demi-noyau 112B et avec la languette 151 du demi-noyau 112B qui est engagée dans la rainure 152 du demi-noyau 112A, ce qui permet de créer un assemblage solidaire entre les deux demi-noyaux 112A et 112B dans l'ensemble 110 où le manchon 111 les sollicite l'un vers l'autre.

Une fois terminée la pose du manchon 111 sur un élément allongé tel que 25, l'opérateur peut désolidariser les deux demi-noyaux 112A et 112B pour enlever le noyau 112 de l'élément allongé sur lequel a été posé le manchon 111.

Les deux tranches 153 sont diamétralement opposées et s'étendent chacune entre la surface externe 136 et la surface interne 132 du demi-noyau 112A.

La surface externe 136 est à profil semi-circulaire et la surface interne 132 est à profil globalement semi-circulaire avec à proximité de chaque tranche 153 une surface plane 131A qui forme avec la surface plane correspondante du demi-noyau 112B une surface plane 131 (figure 4). Dans le noyau 112, les deux surfaces planes 131 sont en regard et parallèles l'une à l'autre.

Le demi-noyau 112A comporte un rebord extérieur 154 (figures 10 et 11) en léger surplomb de la surface externe 136 et qui s'étend depuis l'extrémité 118 du noyau jusqu'à un bord 119 qui est adjacent à une ouverture 155 d'un logement 156.

Le bord 119 est utile, lors de la fabrication de l'ensemble 110, pour caler le film de glissement 113 et faciliter son positionnement sur le noyau 112.

Le film de glissement 113 est interposé entre le manchon élastique 111 et le noyau 112 sur toute la longueur du manchon 111. Le film 113 se prolonge au-delà de l'extrémité 115 du manchon 111.

Comme pour le film 13 de l'ensemble 10, le film 113 s'étend au-delà de l'autre extrémité du manchon 111 (semblable à l'extrémité 16 du manchon 11) jusqu'à faire demi-tour sur l'autre extrémité du noyau 112 (semblable à l'extrémité 17 du noyau 12), puis s'étend intérieurement au noyau 112 jusqu'à son extrémité 118 sur laquelle il fait demi-tour puis s'étend extérieurement au noyau 112 jusqu'au manchon 111 auquel il est fixé extérieurement par un anneau élastique semblable à l'anneau 14.

Comme pour le film de glissement 13, le film de glissement 113 se subdivise, entre l'extrémité du noyau 112 semblable à l'extrémité 17 et son extrémité 118, en deux tronçons se rétrécissant chacun jusqu'à former une bande de fixation 133 relativement étroite.

Les deux bandes de fixation 133 du film de glissement 113 sont diamétralement opposées et comportent chacune une portion 134 s'étendant intérieurement au noyau 112, entre l'extrémité du noyau 112 semblable à l'extrémité 17 et son extrémité 118, le long des surfaces planes 131 puis chacune fait demi-tour sur l'extrémité 118 du noyau 112 puis comporte une portion 135 qui vient se fixer sur le manchon 111 grâce à l'anneau élastique semblable à l'anneau 14.

Comme indiqué ci-dessus, le film de glissement 113 est obtenu en mettant en place sur le noyau 112 le flan 140 illustré sur la figure 5, que l'on va maintenant décrire.

Le flan 140 est découpé dans une matière en feuille ayant un faible coefficient de frottement et ayant une faible épaisseur.

Le flan 140 présente une portion principale de laquelle s'étendent, du côté qu'on voit à droite sur la figure 5, deux tronçons allongés 144 et, du côté que l'on voit à gauche, deux bretelles 149.

La portion principale est délimitée, du côté que l'on voit à gauche, par un bord transversal 141 et, des côtés que l'on voit respectivement en haut et en bas, par un bord longitudinal 142 et par un bord longitudinal 143.

Les deux tronçons allongés 144 sont semblables et orientés suivant une direction longitudinale montrée en trait mixte sur la figure 5.

A partir de la portion principale, chaque tronçon 144 comporte une portion triangulaire 145 puis une bande 146, prévue pour former l'une des bandes de fixation 133 du film de glissement 113.

Les bandes 146 comportent chacune une première portion 147 qui s'élargit ensuite en une deuxième portion 148. La première portion 147 est prévue pour s'étendre intérieurement au noyau 112 le long de la surface plane 131 et la deuxième portion 148 est prévue pour s'étendre extérieurement et être fixé au manchon 111 par l'anneau élastique semblable à l'anneau 14.

Les deux bretelles 149 sont semblables. Chaque bretelle 149 est orientée longitudinalement et a la forme d'une bande étroite.

L'une des bretelles 149 se trouve à mi-distance entre les directions longitudinales suivant lesquelles s'étendent les tronçons allongés 144. L'autre bretelle 149 est adjacente au bord 142.

Dans l'ensemble 110, chaque bretelle 149 forme une adjonction 150 du film de glissement 113. Les deux adjonctions 150 sont visibles sur la figure 4.

On notera que la distance entre les bords 142 et 143 est légèrement plus grande que le périmètre externe du noyau 112.

Lorsque le flan 140 est mis en place sur le noyau 112, la matière située le long du bord 142 chevauche la matière située le long du bord 143.

Dans l'ensemble 110, les bandes de fixation 133 formées par les tronçons allongés 144 sont diamétralement opposées et les adjonctions 150 formées par les bretelles 149 sont diamétralement opposées, avec le couple de bandes de fixation 133 qui est décalé angulairement de 90° par rapport au couple d'adjonctions 150.

Ce décalage angulaire permet d'éviter des interférences entre les bandes de fixation 133 et les adjonctions 150.

Chaque adjonction 150 est pincée entre un organe mâle de verrouillage, ici formé par un fût 174 et par deux ergots 172 et 173 d'une attache 170, et un organe femelle de verrouillage, ici formé par un logement 156 et deux renfoncements 157 et 158 du noyau 112, ainsi que montré sur la figure 6 pour l'attache 170 et pour l'adjonction 150 qui coopèrent avec l'organe femelle prévu dans le demi-noyau 112A.

Ainsi qu'expliqué ultérieurement plus en détails, chaque adjonction 150 comporte une boucle 195 (figure 6) qui fait demi-tour sur l'extrémité 118, avec une portion 137 (figure 4) qui est en regard de la surface externe 136 du noyau 112 et une portion 138 qui s'étend dans l'espace interne au noyau 112.

La description qui suit, en référence aux figures 6 à 15, vaut également pour l'attache 170 et pour l'adjonction 150 qui coopèrent avec l'organe femelle prévu dans le demi-noyau 112B, qui sont respectivement identiques à l'attache 170, à l'adjonction 150 et au demi-noyau 112A montrés sur les figures 6 à 15.

Dans l'ensemble 110, l'organe mâle (fût 174 et ergots 172 et 173) et l'organe femelle (logement 156 et renfoncements 157 et 158) sont à l'emplacement correspondant à celui où se trouvent les adjonctions des ensembles antérieurs susmentionnés, à savoir entre l'extrémité 115 du manchon 111 et l'extrémité 118 du noyau 112 ; et les organes mâle et femelle sont dans une position relative prédéterminée de verrouillage où l'organe mâle est verrouillé au noyau avec l'adjonction 150 qui est fixée au noyau par pincement entre l'organe mâle et l'organe femelle.

Le logement 156 de l'organe femelle a ici un contour ovale et débouche par l'ouverture 155 sur la surface externe 136 du demi-noyau 112A. Les renfoncements 157 et 158 de l'organe femelle sont en retrait par rapport à l'ouverture 155 et débouchent dans le logement 156.

Le logement 156 débouche également dans l'espace interne au noyau 112 (le logement 156 traverse la paroi du noyau 112).

La surface intérieure 161 qui délimite le logement 156 s'étend depuis la surface externe 136 du noyau 112 jusqu'à une surface 159 d'un rebord 160, ici de forme ovale, en débord de la surface interne 132 du demi-noyau 112A.

Les deux renfoncements 157 et 158 débouchent également dans l'espace interne au noyau 112. Ils sont disposés de part et d'autre d'un plan médian du logement 156 et donc en regard l'un de l'autre. L'agencement du renfoncement 158 est l'image miroir de l'agencement du renfoncement 157.

Les renfoncements 157 et 158 sont chacun délimités par une surface de pincement 162, qui est ici formée dans le rebord 160.

Ainsi que représenté schématiquement sur la figure 7, l'adjonction 150 est pincée entre la surface de pincement 162 du renfoncement 157 et une surface de pincement 171 de l'ergot 172.

L'adjonction 150 est également pincée entre une surface de pincement 162 du renfoncement 158 et une surface de pincement 171 de l'ergot 173.

On va maintenant décrire plus en détails l'attache 170, en référence aux figures 12 à 14.

En outre de l'organe mâle de verrouillage (fût 174 et ergots 172 et 173), l'attache 170 comporte un bras de manœuvre 180 et un pied 182.

Le fût 174 est ici de forme cylindrique. L'ergot 172 et l'ergot 173 saillent latéralement du fût 174, avec l'ergot 172 et l'ergot 173 qui sont diamétralement opposés.

On va maintenant décrire plus en détails un des ergots 172, l'autre ergot 173 étant identique.

L'ergot 172 possède une forme parallélépipédique qui présente deux surfaces principales 175 et 176 (figure 12) et des surfaces latérales 177, 178 et 171 (figure 13) qui s'étendent de l'une à l'autre des surfaces principales.

La surface principale 175 est tournée vers le bras de manœuvre 180 et la surface principale 176 vers le côté opposé à celui où se trouve le bras 180.

La surface latérale 171 est située en bout de l'ergot 172. Les surfaces latérales 177 et 178 s'étendent chacune entre la surface 171 et le fût 174.

La surface 171 comporte deux portions incurvées 179 respectivement au voisinage de la surface latérale 177 et au voisinage de la surface latérale 178.

Comme indiqué ci-dessus, la surface 171 a dans l'ergot 172 le rôle d'une surface de pincement.

Ainsi que représenté sur les figures 7 à 11, la surface de pincement 162 du renfoncement 157 comporte une première portion inclinée 163 et une deuxième portion inclinée 163. Les deux portions inclinées 163 sont dirigées l'une vers l'autre. Une portion de jonction 164 orientée longitudinalement est disposée entre les deux portions inclinées 163.

L'adjonction 150 est pincée dans le renfoncement 157 entre la première portion inclinée 163 du renfoncement 157 et l'une des portions incurvées 179 de l'ergot 172 ainsi qu'entre la deuxième portion inclinée 163 du renfoncement 157 et l'autre portion incurvée 179 de l'ergot 172 (figure 7).

Il en est de même dans l'autre renfoncement 158 entre la surface de pincement 171 de l'ergot 173 et la surface de pincement 162 du renfoncement 158.

Les renfoncements 157 et 158 sont également chacun délimités par un épaulement 165 (figures 6 et 8) qui est transversal à la surface de pincement 162.

Dans l'ensemble 110, les épaulements 165 sont en regard de la surface principale 175 de l'ergot 172 et de l'ergot 173.

Le fût 174 de l'attache 170 est lié rigidement à un bras de manœuvre 180 transversal au fût 174, au niveau d'une portion d'extrémité 181 de ce bras de manœuvre 180.

Dans l'ensemble 110, le bras de manœuvre 180 est en regard de la surface externe 136 du noyau 112.

Le déplacement de l'attache 170 suivant la direction axiale du fût 174 est empêché dans le sens extérieur vers intérieur par le contact du bras 180 avec le noyau 112 (avec entre eux l'adjonction 150). Dans le sens intérieur vers extérieur, le déplacement de l'attache 170 suivant la direction axiale du fût 174 est empêché par le contact des ergots 172 et 173 avec le noyau 112 (avec entre eux l'adjonction 150).

Du côté opposé à celui où se trouve le bras 180, le fût 174 de l'attache 170 est lié à un pied 182 (figure 15) qui comporte une cale d'enfoncement 185 et un doigt d'encliquetage 186.

La cale d'enfoncement 185 a un contour similaire au contour de l'ouverture 155 et du logement 156. Ainsi, au montage de l'ensemble 110, la cale 185 peut être insérée dans le logement 156 par l'ouverture 155 et ressortir dans l'espace interne au noyau 112.

Sur le fût 174, le pied 182 est monté à rotation autour de la direction axiale.

L'assemblage entre le pied 182 et le reste de l'attache 170 s'effectue par encliquetage. Pour cet assemblage, le fût 174 présente une cavité cylindrique 183 de réception du doigt d'encliquetage 186.

Les parois qui délimitent la cavité 183 présentent un épaulement à la jonction entre une portion 190 et une portion 191 (figure 6).

Le doigt d'encliquetage 186 saille de la cale 185. Il comporte une tige cylindrique 187 et une tête tronconique 188, dont la base possède un diamètre légèrement supérieur à celui de la tige cylindrique 187.

Lorsque l'attache 170 est assemblée, l'épaulement entre la tige 187 et la tête 188 porte sur l'épaulement entre les portions 190 et 191.

Le doigt d'encliquetage 186 comporte une fente centrale 189 qui sépare transversalement le doigt d'encliquetage 186 en deux éléments qui peuvent fléchir élastiquement l'un vers l'autre.

Lors de l'assemblage du pied 182 avec le reste de l'attache 170, le doigt d'encliquetage 186 est introduit dans la cavité 183 du côté opposé à celui où se trouve le bras 180, la coopération entre la portion 190 et la tête 188 fait fléchir l'une vers l'autre les deux parties de la tête séparées par la fente 189 et lorsque la tête 188 a franchi la portion 190, elle se détend dans la portion 191 de sorte que l'épaulement entre la tige 187 et la tête 188 vient en regard de l'épaulement entre les portions 190 et 191.

Les ergots 172 et 173 comportent chacun une encoche sur leur surface principale 176 où se loge alors, entre les deux encoches, la portion de la cale d'enfoncement 185 en contact avec le fût 174 et les ergots 172 et 173. Ici, pour des raisons de commodités de moulage de la partie de l'attache formée par le fût 174 et par le bras 180, la cavité cylindrique 183 est traversante et la portion d'extrémité 181 présente deux trous 184 chacun au droit d'un des ergots 172 et 173.

Dans l'ensemble 110, l'adjonction 150 est agencée avec, à partir du film 113, un tronçon proximal 196 puis un tronçon 192, puis une boucle 195 puis un tronçon 193 puis un tronçon distal 194.

Comme on le voit sur la figure 6, les tronçons 192 et 193 sont superposés et ce sont eux qui sont pincés entre l'ergot 172 et la surface de pincement 162 du renfoncement 157.

On notera que, pour simplifier, l'adjonction 150 est représentée très schématiquement sur les figures 6 et 7 et qu'en particulier sur la figure 6 des jeux sont laissés entre les tronçons de l'adjonction 150 pour permettre de bien identifier ces tronçons, mais qu'en pratique ces tronçons sont plaqués les uns contre les autres par endroits, notamment aux emplacements où ils sont pincés par les ergots 172 et 173.

Tout comme le film de glissement 113, le tronçon proximal 196 de l'adjonction 150 est disposé en contact avec la surface externe 136 du noyau 112.

L'adjonction 150 s'engage ensuite par le tronçon 192 dans le logement 156 et dans le renfoncement 157. Le tronçon 192 est donc raccordé au film de glissement 113 du côté externe du noyau 112 par le tronçon proximal 196. Dans le renfoncement 157, le tronçon 192 est en contact, d'un côté, avec la surface de pincement 162 et, de l'autre côté, avec le tronçon 193 de l'adjonction 150.

Le tronçon 193 est en contact avec la surface de pincement 171 de l'ergot 172 et il est raccordé au tronçon distal 194 du côté externe au noyau 112.

A partir du renfoncement 157, les deux tronçons superposés 192 et 193 s'étendent dans l'espace interne au noyau 112 et passent sur la cale d'enfoncement 185 après laquelle l'adjonction 150 comporte la boucle 195.

Les deux tronçons superposés 192 et 193 sont reliés par la boucle 195 qui s'étend dans l'espace interne au noyau 112 à partir du tronçon 192 jusqu'à faire demi-tour sur l'extrémité 118 du noyau 112 puis longe la surface externe 136 du noyau 112 puis tourne autour de la surface 161 délimitant le logement 156 puis s'étend dans le renfoncement 158 puis s'étend dans l'espace interne au noyau 112 où elle rejoint le tronçon 193.

Dans le renfoncement 158, l'adjonction 150, et plus précisément la boucle 195, est pincée entre la surface de pincement 162 et la surface de pincement 171 de l'ergot 173.

Ainsi, dans l'ensemble 110 chacune des deux adjonctions 150 est fixée au noyau 112 par pincement entre l'organe mâle (fût 174 et ergots 172 et 173) de l'attache 170 correspondante et l'organe femelle (logement 156 et renfoncements 157 et 158) correspondant du noyau 112; et pour chaque adjonction 150 l'organe mâle et l'organe femelle sont dans une position de verrouillage où ils procurent ce pincement.

Lorsque l'opérateur doit procéder à l'expulsion du noyau 112 hors du manchon 111, il faut interrompre la fixation des adjonctions 150 au noyau 112 afin que le manchon 111 puisse coulisser vis-à-vis du noyau 112.

Pour ce faire, l'opérateur manœuvre chacune des attaches 170 pour que son organe mâle (fût 174 et ergots 172 et 173) soit déplacé par rapport à l'organe femelle (logement 156 et renfoncements 157 et 158) correspondant du noyau 112 jusqu'à atteindre une position relative prédéterminée de déverrouillage où l'organe mâle (et plus généralement l'attache 170) est libre d'être enlevé de l'organe femelle tandis que l'adjonction 150 est libre de se déplacer par rapport au noyau 112.

Ici, l'opérateur agit sur le bras de manœuvre 180 et le fait tourner de 90° (un quart de tour) autour de la direction du fût 174.

Au cours de ce mouvement, l'organe mâle (fût 174 et ergots 172 et 173) de l'attache 170 se déplace par rapport à l'organe femelle (logement 156 et renfoncements 157 et 158) correspondant du noyau 112 avec l'ergot 172 qui quitte le renfoncement 157 et l'ergot 173 qui quitte le renfoncement 158, les ergots 172 et 173 étant disposés dans le logement 156 en fin de mouvement.

L'adjonction 150 n'étant plus pincée, elle est libre de se déplacer par rapport au noyau 112.

Le logement 156 n'offrant pas d'obstacle aux ergots 172 et 173, l'attache 170 est libre d'être enlevée hors du logement 156 par l'ouverture 155.

On notera qu'il n'est pas indispensable que l'opérateur enlève les attaches 170, car elles peuvent sortir spontanément hors du noyau 112 lors de son expulsion hors du manchon 111.

En effet, au cours de cette expulsion, le film de glissement 113 se déplace vis-à-vis du noyau 112 dans le sens qui s'éloigne de l'extrémité 118, l'adjonction 150 se déplace dans le même sens et par conséquent le brin externe de la partie de l'adjonction 150 qui passe autour de l'attache 170 (au départ le tronçon 192 et la partie de la boucle 195 qui se raccorde au tronçon 192 et qui va jusqu'à l'extrémité 118) a tendance à se tendre et donc à faire sortir l'attache 170 hors du noyau 112.

Lors de la fabrication de l'ensemble 110, après la mise en place du flan 140 sur le noyau 112 avec la matière située le long du bord 142 qui chevauche la matière située le long du bord 143, chaque adjonction 150 est passée au travers du logement 156 correspondant puis on lui fait faire le tour de l'extrémité 118 et on revient vers le film 113 en recouvrant l'ouverture 155 puis la partie de l'adjonction précédemment disposée entre l'ouverture 155 et le film 113.

Pour chaque adjonction 150, on procède alors à la pose de l'attache 170 correspondante.

Initialement, l'attache 170 est dans une configuration où la cale d'enfoncement 185 est alignée avec les ergots 172 et 173 (la cale 185 est alors décalée angulairement de 90° par rapport à la position qu'elle a sur les figures 6, 7 12 et 13).

On positionne l'attache 170 ainsi configurée avec la cale 185 en regard de l'ouverture 155 puis on enfonce l'attache dans le logement 156 jusqu'à ce que la cale 185 soit dans l'espace interne au noyau 112 et que le bras 180 soit contre la surface externe 136 du noyau.

Au cours de l'enfoncement de l'attache, la cale 185 entraîne l'adjonction 150 qui se tend alors.

Ensuite, on agit sur le bras de manœuvre 180 et on le fait tourner de 90° (un quart de tour) autour de la direction du fût 174 pour placer le bras de manœuvre en regard du noyau.

Au cours de ce mouvement, l'organe mâle (fût 174 et ergots 172 et 173) de l'attache 170 se déplace par rapport à l'organe femelle (logement 156 et renfoncements 157 et 158) jusqu'à la position relative prédéterminée de verrouillage décrite ci-dessus.

On observera que la mise en place ou l'enlèvement des attaches 170 est simple et commode à effectuer.

Dans une variante non illustrée, le manchon 111 est remplacé par un manchon semblable un peu plus que deux fois plus long et coopère avec un second noyau tubulaire, un second film de glissement et un second couple d'attaches disposés en image miroir de ceux décrits ci-dessus, la pose de ce manchon sur un élément allongé s'effectuant par expulsion de l'un et l'autre des deux noyaux ainsi que décrit ci-dessus.

Dans des variantes non illustrées :
- les adjonctions 150 sont remplacées par des adjonctions qui sont également liées mécaniquement avec le film de glissement 113 mais autrement qu'en étant venu de matière avec lui, par exemple par agrafage, couture ou collage ;
- les adjonctions 150 sont remplacées par des adjonctions qui sont agencées autrement qu'à partir de bretelles telles que 149, par exemple avec une portion triangulaire ;
- un nombre d'adjonctions du film différent de deux est prévu, par exemple une seule ou trois, avec chaque adjonction qui coopère avec une attache telle que 170 ;
- l'adjonction 150 est remplacée par une adjonction mise en place différemment, par exemple avec uniquement une extrémité distale engagée dans un logement du noyau et une seule épaisseur pincée ;
- les ergots 172 et 173 ne comportent pas d'encoche sur leur surface principale 176.
- les attaches 170 sont remplacées par des attaches ayant un nombre d'ergots différent de deux, par exemple un seul, le nombre de renfoncements étant prévu en conséquence ;
- la partie de l'attache formant organe mâle et la partie du noyau formant organe femelle sont agencées différemment respectivement d'un fût dont saille au moins un ergot et d'un logement où débouche au moins un renfoncement, par exemple avec l'organe mâle qui est formé par une tige filetée et l'organe femelle par un trou taraudé ;
- l'attache 170 est remplacée par une attache ayant une cale d'enfoncement différente, par exemple rigidement liée au reste de l'attache ; ou par une attache sans cale d'enfoncement ;
- le bras de manœuvre 180 est remplacé par un autre organe de manœuvre, par exemple une empreinte pour un tournevis ;
- le logement 156 est remplacé par un logement qui ne débouche pas dans l'espace interne au noyau 112 et/ou par un logement qui a un contour autre qu'ovale, par exemple circulaire ; et/ou
- le noyau 112 est remplacé par un noyau agencé différemment, par exemple d'une seule pièce et/ou sans rebords tels que 154 et 160.

De nombreuses autres variantes sont possibles en fonction des circonstances, et l'on rappelle à cet égard que l'invention ne se limite pas aux exemples décrits et représentés.

## Revendications

1. Ensemble pour recouvrir à enserrement un élément allongé de dimensions prédéterminées avec un manchon élastique de protection, comportant :
- ledit manchon (111) ;
- un noyau tubulaire (112) de maintien en expansion dudit manchon (111), recouvert à enserrement par ledit manchon, configuré pour recevoir intérieurement ledit élément allongé ;
- un film de glissement (113) interposé entre ledit manchon (111) et ledit noyau (112) pour permettre audit noyau de coulisser par rapport audit manchon ; et
- une adjonction (150) du film de glissement (113) liée mécaniquement au film de glissement (113) et fixée au noyau (112) à un emplacement de fixation prédéterminé situé entre une extrémité (115) du manchon et une extrémité (118) du noyau située au-delà de ladite extrémité (115) du manchon ;
ledit ensemble (110) étant **caractérisé en ce qu'**il comporte en outre une attache (170) pourvue d'un organe mâle de verrouillage (172-174) tandis que ledit noyau (112) présente un organe femelle de verrouillage (156-158), ledit organe femelle (156-158) et ledit organe mâle (172-174) étant audit emplacement prédéterminé de fixation dans une position relative prédéterminée de verrouillage où l'organe mâle (172-174) est verrouillé au noyau (112) avec l'adjonction du film (150) qui est fixée au noyau (112) par pincement entre l'organe mâle (172-174) et l'organe femelle (156-158) ; ladite adjonction (150), ledit organe femelle (156-158) et ladite attache (170) étant configurés pour que l'organe mâle (172-174) puisse être déplacé par rapport à l'organe femelle (156-158) jusqu'à ce que l'organe mâle (172-174) et l'organe femelle (156-158) prennent une position relative prédéterminée de déverrouillage où l'organe mâle (172-174) est libre d'être enlevé de l'organe femelle (156-158) tandis que l'adjonction (150) est libre de se déplacer par rapport au noyau (112).

2. Ensemble selon la revendication 1, **caractérisé en ce que** le déplacement de l'organe mâle (172-174) par rapport à l'organe femelle (156-158) entre la position relative de verrouillage et la position relative de déverrouillage est un déplacement angulaire.

3. Ensemble selon l'une quelconque des revendications 1 ou 2, **caractérisé en ce que** ledit organe femelle comporte un logement (156) débouchant par une ouverture (155) sur la surface externe du noyau (136) et un renfoncement (157) débouchant dans ledit logement (156) et étant en retrait par rapport à ladite ouverture (155), ledit renfoncement (157) étant délimité par une surface de pincement (162), ledit organe mâle comportant un ergot (172) présentant une surface de pincement (171), ladite adjonction (150) étant pincée entre ladite surface de pincement (162) du renfoncement (157) et ladite surface de pincement (171) de l'ergot (172) dans ladite position prédéterminée de verrouillage ; ledit logement (156), ledit renfoncement (157) et ledit ergot (172) étant configurés pour que l'ergot (172) soit hors dudit renfoncement (157) dans ladite position prédéterminée de déverrouillage.

4. Ensemble selon la revendication 3, **caractérisé en ce que** ladite surface de pincement (162) du renfoncement (157) est formée dans un rebord (160) de la surface interne (132) du noyau.

5. Ensemble selon l'une quelconque des revendications 3 ou 4, **caractérisé en ce que** ladite surface de pincement (162) du renfoncement (157) comporte une première portion (163) inclinée et une deuxième portion inclinée (163), la première portion et la deuxième portion étant inclinée l'une vers l'autre, ladite surface de pincement (171) dudit ergot (172) comporte une première portion incurvée (179) et une deuxième portion incurvée (179), ladite adjonction (150) étant pincée entre la première portion inclinée (163) et la première portion incurvée (179) ainsi qu'entre la deuxième portion inclinée (163) et la deuxième portion incurvée (179).

6. Ensemble selon l'une quelconque des revendications 3 à 5, **caractérisé en ce que** ledit organe femelle comporte un autre renfoncement (158) étant l'image miroir dudit renfoncement (157) par rapport à un plan médian dudit logement (156), ledit organe mâle comportant un fût (174) duquel saille latéralement ledit ergot (172) et un autre ergot (173) opposé audit ergot (172), ladite adjonction (150) étant également pincée entre une surface de pincement (162) dudit autre renfoncement (158) et une surface de pincement (171) dudit autre ergot (173) dans ladite position prédéterminée de verrouillage; ledit logement (156), ledit autre renfoncement (158) et ledit autre ergot (173) étant configurés pour que ledit autre ergot (173) soit hors dudit autre renfoncement (158) dans ladite position prédéterminée de déverrouillage.

7. Ensemble selon la revendication 6, **caractérisé en ce que** ledit logement (156), ledit renfoncement (157) et ledit autre renfoncement (158) débouchent dans l'espace interne au noyau (112); dans ladite position prédéterminée de verrouillage l'adjonction (150) comporte deux tronçons (192, 193) superposés pincés entre ladite surface de pincement (162) du renfoncement (157) et ladite surface de pincement (171) de l'ergot (172), respectivement un premier tronçon (192) en contact avec la surface de pincement (162) du renfoncement (157) et un deuxième tronçon (193) en contact avec la surface de pincement (171) de l'ergot (172), ledit premier tronçon (192) étant raccordé audit film de glissement (113) du côté externe au noyau, l'adjonction (150) comportant un tronçon distal (194) auquel est raccordé ledit deuxième tronçon (193) du côté externe au noyau, les deux tronçons superposés (192, 193) s'étendant à partir dudit renfoncement (157) dans l'espace interne au noyau, ladite adjonction (150) comportant une boucle (195) reliant les deux tronçons superposés (192, 193) en s'étendant dans l'espace interne au noyau à partir du premier tronçon (192) jusqu'à faire demi-tour sur ladite extrémité (118) du noyau puis s'engage dans ledit logement (156) puis s'étend dans ledit autre renfoncement (158) où elle est pincée entre ladite surface de pincement (162) dudit autre renfoncement (158) et ladite surface de pincement (171) dudit autre ergot (173) puis s'étend dans l'espace interne au noyau où elle rejoint ledit deuxième tronçon (193).

8. Ensemble selon la revendication 7, **caractérisé en ce que** l'attache (170) comporte une cale d'enfoncement (185) présentant un contour similaire à celui de ladite ouverture (155) et étant montée à rotation sur le reste de l'attache (170) autour de la direction axiale dudit fût (174); et dans ladite position prédéterminée de verrouillage, ladite cale d'enfoncement (185) est dans l'espace interne au noyau et l'adjonction (150) passe sur la cale d'enfoncement (185).

9. Ensemble selon l'une quelconque des revendications 3 à 8, **caractérisé en ce que** ledit logement (156) a un contour ovale.

10. Ensemble selon l'une quelconque des revendications 1 à 9, **caractérisé en ce que** ledit organe mâle comporte un fût (174) duquel saille latéralement un ergot (172), le fût (174) étant lié rigidement à un bras de manœuvre (180) qui est en regard de la surface externe (136) du noyau (112).

11. Ensemble selon l'une quelconque des revendications 1 à 10, **caractérisé en ce qu'**il comporte une autre adjonction (150) qui est diamétralement opposée à ladite adjonction (150) par rapport au noyau (112) et qui est semblable à ladite adjonction (150), ledit ensemble (110) comporte en outre une autre attache (170), semblable à ladite attache (170) et ledit noyau (112) présente un autre organe femelle de verrouillage, semblable audit organe femelle de verrouillage.

12. Ensemble l'une quelconque des revendications 1 à 11, **caractérisé en ce que** ledit noyau s'étend entre ladite extrémité (118) et une autre extrémité, opposée à ladite extrémité (118) tandis que ledit film de glissement (113) s'étend jusqu'à ladite autre extrémité sur laquelle ledit film de glissement fait demi-tour puis s'étend intérieurement audit noyau (112) jusqu'à ladite extrémité (118) sur laquelle deux bandes de fixation (133) du film de glissement (113), diamétralement opposée, font demi-tour puis s'étendent extérieurement audit noyau (112) jusqu'audit manchon (111) auquel elles sont fixées extérieurement, lesdites deux bandes de fixations (133) étant décalées angulairement par rapport à ladite adjonction (150).

## Patentansprüche

1. Anordnung zum einspannenden Abdecken eines länglichen Elements mit vorbestimmten Abmessungen mittels einer elastischen Schutzhülse, enthaltend:
- die genannte Hülse (111);
- einen röhrenförmigen Kern (112) zum Halten der Hülse (111) im aufgeweiteten Zustand, der unter Einspannung von der Hülse abgedeckt wird und dazu ausgelegt ist, im Inneren das längliche Element aufzunehmen;
- einen Gleitfilm (113), der zwischen der Hülse (111) und dem Kern (112) angeordnet ist, damit der Kern relativ zu der Hülse gleiten kann; und
- ein Zusatzteil (150) zum Gleitfilm (113), das mechanisch mit dem Gleitfilm (113) verbunden und am Kern (112) an einer vorbestimmten Befestigungsstelle zwischen einem Ende (115) der Hülse und einem Ende (118) des Kerns, das sich über das Ende (115) der Hülse hinaus erstreckt, befestigt ist;
wobei die Anordnung (110) **dadurch gekennzeichnet ist, dass** sie ferner ein Befestigungselement (170) enthält, das mit einem Verriegelungseinsteckteil (172 - 174) versehen ist, während der Kern (112) ein Verriegelungsaufnahmeteil (156 - 158) aufweist, wobei das Aufnahmeteil (156 - 158) und das Einsteckteil (172 - 174) sich an der vorbestimmten Befestigungsstelle in einer vorbestimmten relativen Verriegelungsposition befinden, wo das Einsteckteil (172 - 174) mit dem Kern (112) verriegelt ist, wobei das Filmzusatzteil (150) durch Einklemmen zwischen Einsteckteil (172 - 174) und Aufnahmeteil (156 - 158) am Kern (112) befestigt ist; wobei das Zusatzteil (150), das Aufnahmeteil (156 - 158) und das Befestigungselement (170) so ausgelegt sind, dass das Einsteckteil (172 - 174) in Bezug auf das Aufnahmeteil (156 - 158) so weit verlagert werden kann, bis das Einsteckteil (172 - 174) und das Aufnahmeteil (156 - 158) eine vorbestimmte relative Entriegelungsposition einnehmen, wo das Einsteckteil (172 - 174) frei vom Aufnahmeteil (156 - 158) abnehmbar ist, während das Zusatzteil (150) relativ zum Kern (112) frei verlagerbar ist.

2. Anordnung nach Anspruch 1, **dadurch gekennzeichnet, dass** die Verlagerung des Einsteckteils (172 - 174) relativ zum Aufnahmeteil (156 - 158) zwischen der relativen Verriegelungsposition und der relativen Entriegelungsposition eine Winkelverlagerung ist.

3. Anordnung nach einem der Ansprüche 1 oder 2, **dadurch gekennzeichnet, dass** das Aufnahmeteil eine Aufnahmeausnehmung (156) aufweist, die mit einer Öffnung (155) an der Außenfläche des Kerns (136) ausmündet, sowie eine Vertiefung (157), die in die Aufnahmeausnehmung (156) mündet und relativ zu der Öffnung (155) zurückgesetzt ist, wobei die Vertiefung (157) durch eine Klemmfläche (162) begrenzt ist, wobei das Einsteckteil einen Vorsprung (172) mit einer Klemmfläche (171) aufweist, wobei das Zusatzteil (150) zwischen der Klemmfläche (162) der Vertiefung (157) und der Klemmfläche (171) des Vorsprungs (172) in der vorbestimmten Verriegelungsposition eingeklemmt ist; wobei die Aufnahmeausnehmung (156), die Vertiefung (157) und der Vorsprung (172) so ausgelegt sind, dass der Vorsprung (172) in der vorbestimmten Entriegelungsposition außerhalb der Vertiefung (157) liegt.

4. Anordnung nach Anspruch 3, **dadurch gekennzeichnet, dass** die Klemmfläche (162) der Vertiefung (157) in einer Randkante (160) der Innenfläche (132) des Kerns ausgebildet ist.

5. Anordnung nach Anspruch 3 oder 4, **dadurch gekennzeichnet, dass** die Klemmfläche (162) der Vertiefung (157) einen ersten geneigten Abschnitt (163) und einen zweiten geneigten Abschnitt (163) aufweist, wobei der erste Abschnitt und der zweite Abschnitt zueinander geneigt verlaufen, wobei die Klemmfläche (171) des Vorsprungs (172) einen ersten gekrümmten Abschnitt (179) und einen zweiten gekrümmten Abschnitt (179) aufweist, wobei das Zusatzteil (150) zwischen dem ersten geneigten Abschnitt (163) und dem ersten gekrümmten Abschnitt (179) und zwischen dem zweiten geneigten Abschnitt (163) und dem zweiten gekrümmten Abschnitt (179) eingeklemmt ist.

6. Anordnung nach einem der Ansprüche 3 bis 5, **dadurch gekennzeichnet, dass** das Aufnahmeteil eine weitere Vertiefung (158) aufweist, die in Bezug auf eine Mittelebene der Aufnahmeausnehmung (156) spiegelbildlich zur Vertiefung (157) ausgeführt ist, wobei das Einsteckteil einen Schaft (174), von dem der Vorsprung (172) seitlich vorsteht, und einen dem Vorsprung (172) entgegengesetzten weiteren Vorsprung (173) aufweist, wobei das Zusatzteil (150) auch zwischen einer Klemmfläche (162) der weiteren Vertiefung (158) und einer Klemmfläche (171) des weiteren Vorsprungs (173) in der vorbestimmten Verriegelungsposition eingeklemmt ist; wobei die Aufnahmeausnehmung (156), die weitere Vertiefung (158) und der weitere Vorsprung (173) so ausgelegt sind, dass der weitere Vorsprung (173) in der vorbestimmten Entriegelungsposition außerhalb der weiteren Vertiefung (158) liegt.

7. Anordnung nach Anspruch 6, **dadurch gekennzeichnet, dass** die Aufnahmeausnehmung (156), die Vertiefung (157) und die weitere Vertiefung (158) in den Raum innerhalb des Kerns (112) münden; wobei in der vorbestimmten Verriegelungsposition das Zusatzteil (150) zwei übereinanderliegende Abschnitte (192, 193) aufweist, die zwischen der Klemmfläche (162) der Vertiefung (157) und der Klemmfläche (171) des Vorsprungs (172) eingeklemmt sind, nämlich einen ersten Abschnitt (192) in Kontakt mit der Klemmfläche (162) der Vertiefung (157) und einen zweiten Abschnitt (193) in Kontakt mit der Klemmfläche (171) des Vorsprungs (172), wobei der erste Abschnitt (192) mit dem Gleitfilm (113) auf der Seite außerhalb des Kerns verbunden ist, wobei das Zusatzteil (150) einen distalen Abschnitt (194) aufweist, mit dem der zweite Abschnitt (193) auf der Seite außerhalb des Kerns verbunden ist, wobei sich die beiden übereinanderliegenden Abschnitte (192, 193) ausgehend von der Vertiefung (157) in den Raum innerhalb des Kerns erstrecken, wobei das Zusatzteil (150) eine Schleife (195) aufweist, die die beiden übereinanderliegenden Abschnitte (192, 193) verbindet, indem sie sich vom ersten Abschnitt (192) in den Raum innerhalb des Kerns so weit erstreckt, bis sie an dem genannten Ende (118) des Kerns umgelenkt wird, dann in die Aufnahmeausnehmung (156) eingreift und sich in die weitere Vertiefung (158) erstreckt, wo sie zwischen der Klemmfläche (162) der weiteren Vertiefung (158) und der Klemmfläche (171) des weiteren Vorsprungs (173) eingeklemmt wird und sich dann in den Raum innerhalb des Kerns erstreckt, wo sie auf den zweiten Abschnitt (193) trifft.

8. Anordnung nach Anspruch 7, **dadurch gekennzeichnet, dass** das Befestigungselement (170) einen Eintreibkeil (185) aufweist, der eine ähnliche Kontur wie die Öffnung (155) hat und um die axiale Richtung des Schafts (174) drehbar am verbleibenden Befestigungselement (170) gelagert ist; und sich der Eintreibkeil (185) in der vorbestimmten Verriegelungsposition im Raum innerhalb des Kerns befindet und das Zusatzteil (150) über den Eintreibkeil (185) verläuft.

9. Anordnung nach einem der Ansprüche 3 bis 8, **dadurch gekennzeichnet, dass** die Aufnahmeausnehmung (156) eine ovale Kontur hat.

10. Anordnung nach einem der Ansprüche 1 bis 9, **dadurch gekennzeichnet, dass** das Einsteckteil einen Schaft (174) aufweist, von dem seitlich ein Vorsprung (172) vorsteht, wobei der Schaft (174) starr mit einem Bedienarm (180) verbunden ist, der der Außenfläche (136) des Kerns (112) gegenüberliegt.

11. Anordnung nach einem der Ansprüche 1 bis 10, **dadurch gekennzeichnet, dass** sie ein weiteres Zusatzteil (150) aufweist, das dem Zusatzteil (150) in Bezug auf den Kern (112) diametral gegenüberliegt und dem Zusatzteil (150) ähnlich ist, wobei die Anordnung (110) ferner ein weiteres Befestigungselement (170) aufweist, das dem Befestigungselement (170) ähnlich ist, und der Kern (112) ein weiteres Verriegelungsaufnahmeteil aufweist, das dem genannten Verriegelungsaufnahmeteil ähnlich ist.

12. Anordnung nach einem der Ansprüche 1 bis 11, **dadurch gekennzeichnet, dass** sich der Kern zwischen dem Ende (118) und einem weiteren, dem Ende (118) entgegengesetzten Ende erstreckt, während sich der Gleitfilm (113) bis zu dem weiteren Ende erstreckt, an dem der Gleitfilm umgelenkt wird, und sich dann innerhalb des Kerns (112) bis zu dem Ende (118) erstreckt, an dem zwei diametral entgegengesetzte Befestigungsstreifen (133) des Gleitfilms (113) umgelenkt werden und sich dann außerhalb des Kerns (112) bis zu der Hülse (111) erstrecken, an der sie außen befestigt sind, wobei die beiden Befestigungsstreifen (133) in Bezug auf das Zusatzteil (150) winkelversetzt sind.

## Claims

1. Assembly for tightly covering an elongate member of predetermined dimensions with an elastic protective sleeve, comprising:
- said sleeve (111);
- a tubular core (112) for holding expanded said sleeve (111), which core is covered tightly by said sleeve and is configured to internally receive said elongate member;
- a slip film (113) interposed between said sleeve (111) and said core (112) to allow said core to slide relative to said sleeve; and
- an add-on (150) to the slip film (113) which is mechanically bonded to the slip film (113) and attached to the core (112) at a predetermined attachment location between an end (115) of the sleeve and an end (118) of the core located beyond said end (115) of the sleeve;
said assembly (110) being **characterised in that** it further comprises a fastener (170) provided with a male locking member (172-174) while said core (112) has a female locking member (156-158), said female member (156-158) and said male member (172-174) being at said predetermined attachment location in a predetermined relative locking position in which the male member (172-174) is locked to the core (112) with the add-on (150) to the film which is attached to the core (112) by clamping between the male member (172-174) and the female member (156-158); said add-on (150), said female member (156-158) and said fastener (170) being configured such that the male member (172-174) can be moved relative to the female member (156-158) until the male member (172-174) and the female member (156-158) adopt a predetermined relative unlocking position in which the male member (172-174) is free to be removed from the female member (156-158) while the add-on (150) is free to move relative to the core (112).

2. Assembly according to claim 1, **characterised in that** the movement of the male member (172-174) relative to the female member (156-158) between the relative locking position and the relative unlocking position is an angular movement.

3. Assembly according to either claim 1 or claim 2, **characterised in that** said female member comprises a housing (156) that opens out through an opening (155) on the external surface of the core (136) and a recess (157) that opens into said housing (156) and is recessed with respect to said opening (155), said recess (157) being delimited by a clamping surface (162), said male member comprising a lug (172) having a clamping surface (171), said add-on (150) being clamped between said clamping surface (162) of the recess (157) and said clamping surface (171) of the lug (172) in said predetermined locking position; said housing (156), said recess (157) and said lug (172) being configured such that the lug (172) is out of said recess (157) in said predetermined unlocking position.

4. Assembly according to claim 3, **characterised in that** said clamping surface (162) of the recess (157) is formed in a rim (160) of the internal surface (132) of the core.

5. Assembly according to either claim 3 or claim 4, **characterised in that** said clamping surface (162) of the recess (157) comprises a first inclined portion (163) and a second inclined portion (163), the first portion and the second portion being inclined towards one another, and said clamping surface (171) of said lug (172) comprises a first curved portion (179) and a second curved portion (179), said add-on (150) being clamped between the first inclined portion (163) and the first curved portion (179) as well as between the second inclined portion (163) and the second curved portion (179).

6. Assembly according to any of claims 3 to 5, **characterised in that** said female member comprises another recess (158) that is the mirror image of said recess (157) with respect to a median plane of said housing (156), said male member comprising a shaft (174) from which said lug (172) protrudes laterally, and another lug (173) opposite said lug (172), said add-on (150) also being clamped between a clamping surface (162) of said other recess (158) and a clamping surface (171) of said other lug (173) in said predetermined locking position; said housing (156), said other recess (158) and said other lug (173) being configured such that said other lug (173) is outside said other recess (158) in said predetermined unlocking position.

7. Assembly according to claim 6, **characterised in that** said housing (156), said recess (157) and said other recess (158) open into the inner space of the core (112); in said predetermined locking position the add-on (150) comprises two sections (192, 193) that are superimposed so as to be clamped between said clamping surface (162) of the recess (157) and said clamping surface (171) of the lug (172), respectively a first section (192) in contact with the clamping surface (162) of the recess (157) and a second section (193) in contact with the clamping surface (171) of the lug (172), said first section (192) being connected to said slip film (113) on the side external to the core, the add-on (150) comprising a distal section (194) to which said second section (193) is connected on the side external to the core, the two superimposed sections (192, 193) extending from said recess (157) into the inner space of the core, said add-on (150) comprising a loop (195) which connects the two superimposed sections (192, 193) by extending into the inner space of the core from the first section (192) until it turns around on said end (118) of the core then engages in said housing (156) and then extends into said other recess (158) where it is clamped between said clamping surface (162) of said other recess (158) and said clamping surface (171) of said other lug (173) then extends into the inner space of the core where it joins said second section (193).

8. Assembly according to claim 7, **characterised in that** the fastener (170) comprises a driving wedge (185) which has a contour similar to that of said opening (155) and is mounted for rotation on the rest of the fastener (170) about the axial direction of said shaft (174); and in said predetermined locking position, said driving wedge (185) is in the inner space of the core and the add-on (150) passes over the driving wedge (185).

9. Assembly according to any of claims 3 to 8, **characterised in that** said housing (156) has an oval contour.

10. Assembly according to any of claims 1 to 9, **characterised in that** said male member comprises a shaft (174) from which a lug (172) protrudes laterally, the shaft (174) being rigidly connected to an operating arm (180) which is opposite the external surface (136) of the core (112).

11. Assembly according to any of claims 1 to 10, **characterised in that** it comprises another add-on (150) which is diametrically opposed to said add-on (150) with respect to the core (112) and which is similar to said add-on (150), and said assembly (110) further comprises another fastener (170) which is similar to said fastener (170) and said core (112) has another female locking member which is similar to said female locking member.

12. Assembly according to any of claims 1 to 11, **characterised in that** said core extends between said end (118) and another end opposite to said end (118), while said slip film (113) extends as far as said other end on which said slip film turns around and then extends inside said core (112) as far as said end (118) on which two attachment strips (133) of the slip film (113), which are diametrically opposed, turn around then extend externally to said core (112) as far as said sleeve (111) to which they are attached externally, said two attachment strips (133) being angularly offset relative to said add-on (150).
